# FASCICULE DE BREVET EUROPEEN

(11) **EP 3 448 159 B1**
(45) Date de publication et mention de la délivrance du brevet: **30.08.2023**
(21) Numéro de dépôt: 17721194.3
(22) Date de dépôt: 04.04.2017
(51) Int. Cl.: A21D 2/18, A23L 29/225, A23L 33/00, A23P 20/12, A23P 20/10, A23L 5/10

(54) **PROCÉDÉ DE FABRICATION DE BEIGNETS NON FRITS**
VERFAHREN ZUR HERSTELLUNG VON UNFRITTIERTEN NUGGET-ÄHNLICHEN PRODUKTEN
METHOD FOR PRODUCING UNFRIED NUGGET-LIKE PRODUCTS

(30) Priorité: 28.04.2016 FR 1653805
(43) Date de publication de la demande: 06.03.2019
(73) Titulaire: Roquette Frères, 62136 Lestrem (FR)
(72) Inventeur: DUBAL, Edith, 62136 RICHEBOURG (FR); DEDIEU, Géraldine, 59120 LOOS (FR)
(74) Mandataire: Plasseraud IP
(86) Numéro de dépôt international: PCT/FR2017/050793
(87) Numéro de publication internationale: WO 2017/187039

(56) Documents cités:
- EP-A1- 1 557 093
- WO-A1-02/49461
- WO-A1-03/005828
- WO-A2-2013/181524
- US-A- 6 159 521
- US-A1- 2005 271 784

## Description

### DOMAINE TECHNIQUE DE L'INVENTION

La présente invention concerne un procédé de fabrication de produits panés de type beignets sans friture, comprenant une étape de préparation d'une pâte d'enrobage particulière, à partir notamment de farine de riz et d'amidons modifiés, combinée à une étape de cuisson en four vapeur.

Ce procédé permet l'obtention de beignets présentant des caractéristiques requises de croustillance, d'uniformité, de couleur et de teneur réduite en matières grasses.

L'invention concerne également le beignet susceptible d'être obtenu suivant le procédé précité.

### CONTEXTE DE L'INVENTION

La santé et la nutrition sont des problématiques de plus en plus importantes aux yeux des consommateurs et se placent au coeur des innovations industrielles.

Dans le domaine des préparations culinaires, les produits frits, notamment panés, tels que les escalopes panées, le cordon bleu, les bouchées de poulet panées (dites « beignets » de poulet) ou le poisson pané sont généralement très appréciés par les consommateurs. La panure ne confère pas seulement du croustillant, mais également une apparence attractive pour le consommateur. Les produits panés sont également très appréciés par les consommateurs et les restaurateurs, notamment dans la restauration collective, du fait qu'ils peuvent être fournis prêts à l'emploi, nécessitant alors uniquement un réchauffage approprié.

Cependant, les valeurs nutritionnelles des produits panés ne correspondent généralement pas aux exigences d'une alimentation équilibrée, notamment du fait de leur teneur élevée en matières grasses et de leur faible rapport pondéral protéines / lipides. Par ailleurs, les procédés de friture ont très mauvaise presse auprès des consommateurs.
Selon la demande de brevet internationale WO 2008/107585, il existe sur le marché des produits à base de viande non frits du type pané. Toutefois, l'enrobage de ces produits ne présente pas le crousti-fondant des produits panés traditionnels, et ils possèdent en outre une texture dure et sèche en bouche. Ces produits ne sont donc pas satisfaisants au point de vue organoleptique.

Il est ainsi suggéré dans cette demande de brevet que pour diminuer la quantité de matière grasse dans des produits panés tel que des beignets, trois solutions s'offrent aux producteurs :
- modifier la qualité de la matrice (réduire l'incorporation de matières grasses et utiliser principalement des parties nobles),
- changer les propriétés de l'enrobage (création de «barrières» contre l'entrée d'huile),
- modifier le procédé de fabrication (alternatives à la friture).

Classiquement, les étapes de friture dans le processus de production des produits panés apportent les caractéristiques sensorielles spécifiques à ces produits mais augmentent également leur taux de matière grasse.

En alternative à la friture, les industriels se sont donc adaptés au marché en proposant par exemple des produits pré-frits pouvant être cuits au four chez le consommateur. La suppression de l'étape de friture chez le consommateur diminue ainsi le pourcentage de matière grasse ingéré.

Un certain nombre de solutions alternatives à la friture ont ainsi été proposées :
∘ dans la demande de brevet FR 2911046, une étape de glaçage a été proposée dans le processus de fabrication pour protéger le produit enrobé de l'humidité ambiante et le figer.
Ils a également été proposé d'incorporer de l'huile dans la pâte à frire (terme anglosaxon de « batter ») plutôt que par friture afin de maîtriser plus facilement l'apport lipidique.
∘ Dans la demande de brevet US 2013/0108744, tout comme dans le brevet GB 9323230, l'étape de pré-friture a été remplacée par une cuisson dans un four vapeur à 230-250°C pendant 3 minutes pour figer l'enrobage sur le substrat.
∘ Dans la demande de brevet internationale WO 2003/101228, l'étape de pré-friture est également supprimée pour faire coaguler le « batter » dans un bain d'eau chaude (70-80°C) pendant 30s avant de le placer dans un four ou micro-onde. L'étape de friture finale (chez le consommateur) est cependant conservée.
∘ Dans le brevet CA 2114204, l'albumine d'oeuf est séchée pour stabiliser le « batter » et former un film adhésif autour du substrat.
∘ Dans la demande de brevet US 20102/72871 et dans l'article de Purcell et al. (Enzyme-modified starch as an oil delivery system for bake-only chicken nuggets, 2014, in Journal of Food Science, Vol 79, Nr. 5, 8), il est plutôt préconisé l'utilisation d'un amidon modifié par enzyme pour l'obtention d'un beignet ayant les caractéristiques sensorielles d'un produit frit.

Enfin, le document WO 2013/181524 propose un procédé d'enrobage d'un aliment non frit destiné à lui conférer l'aspect, la texture et le goût de produits frits, ce procédé comprenant l'application sur l'aliment d'une base huileuse suivie d'une composition à base d'amidon, puis d'eau, et la cuisson du produit ainsi obtenu.

Toutefois, aucune de ces solutions n'est pleinement satisfaisante.

Par ailleurs, cette suppression de la friture n'est pas sans conséquences et impose donc un défi technique important dans l'obtention des qualités organoleptiques et visuelles requises.

### RESUME DE L'INVENTION

L'invention vise à mettre au point un nouveau procédé de préparation de beignets, en combinant une étape de modification des propriétés d'enrobage de la matrice des beignets avec un procédé de cuisson alternatif à la friture traditionnelle.

La présente invention concerne plus particulièrement un procédé de préparation de beignets, qui comprend les étapes successives consistant à :
1) Recouvrir une matrice de beignets avec de la farine de blé,
2) Enrober la matrice farinée avec une pâte constituée de :
   a. 40 à 50 % d'un pré-mélange comprenant :
      i. de la farine de riz,
      ii. au moins un polysaccharide hydrosoluble à froid,
      iii. au moins un amidon de pois réticulé, présentant une teneur en amylose comprise entre 30 et 40% (sec/sec),
      iv. au moins une dextrine
   b. 40 à 55 % d'eau,
   c. 3% à 10 % de matière(s) grasse(s),
      la somme des pourcentages ci-dessus étant égale à 100%,
3) Précuire au four vapeur les matrices ainsi enrobées, pour obtenir des beignets, et
4) Surgeler les beignets ainsi obtenus,
   caractérisé en ce que l'étape de pré-cuisson est effectuée à une humidité relative de 50% et à une température comprise entre 190 et 210°C.

Elle concerne également le beignet susceptible d'être obtenu suivant le procédé défini ci-dessus.

### DESCRIPTION DETAILLEE DE L'INVENTION

Faisant suite à une demande croissante des clients, la présente invention vise notamment un procédé de préparation de beignets, notamment de beignets de poulets (« nuggets » de poulet) croustillants, ne comprenant pas d'étape de friture.

Le procédé de préparation des beignets non frits selon l'invention comprend une première étape consistant à fariner une matrice de beignets à l'aide de farine de blé. La matrice de beignets renferme habituellement de la viande et/ou des légumes, de l'eau, des aromates et éventuellement un ou plusieurs agents liants. Cette étape de farinage est suivie d'une étape d'enrobage des beignets farinés à l'aide d'une pâte d'enrobage (ou "batter") qui est une émulsion comprenant un pré-mélange, de l'eau et une ou des matière(s) grasse(s).

De manière préférentielle, la pâte d'enrobage est constituée de 45 % d'un pré-mélange, 50% d'eau et 5 % de matière grasse.

Le pré-mélange renferme de la farine de riz, au moins un polysaccharide hydrosoluble à froid, au moins un amidon de pois réticulé et au moins une dextrine.

La farine de riz est un ingrédient clé pour conférer aux beignets obtenus selon l'invention une croustillance similaire à celle des beignets pré-frits du commerce. Il a été observé qu'elle n'augmentait pas la viscosité de la pâte d'enrobage de manière inacceptable, contrairement à la farine de blé. Son taux d'incorporation peut être compris entre 20 et 25 %, de préférence être de l'ordre de 24 à 25%, par rapport au poids total du pré-mélange.

Le polysaccharide hydrosoluble à froid, c'est-à-dire à une température inférieure ou égale à 25°C, peut notamment être choisi parmi :
- les dérivés de cellulose modifiés chimiquement, tels que l'hydroxyéthyl cellulose (HEC), l'hydroxypropyl cellulose (HPC) ou l'hydroxypropylméthylcellulose (HPMC),
- les hémicelluloses natives ou modifiées,
- les amidons et les fécules prégélatinisés, qu'ils soient natifs ou modifiés chimiquement,
- les polysaccharides issus de végétaux tels que les pectines, la gomme guar, la gomme de konjac, la gomme de sterculia, la gomme de caroube ou la gomme arabique,
- les polysaccharides issus d'algues, tels que l'agar- agar, les carraghénanes, les alginates et leurs sels,
- les polysaccharides issus de microorganismes tels que la gomme xanthane ou la pullulane, ainsi que leurs mélanges.

On utilisera de préférence un amidon prégélatinisé. Dans la présente invention, le terme "amidon prégélatinisé" est utilisé pour désigner tout amidon natif ayant subi un traitement thermique en présence d'eau, de sorte qu'il perde totalement sa structure granulaire et qu'il devienne soluble dans l'eau froide. Le traitement hydrothermique de gélatinisation peut être effectué par cuisson vapeur, cuisson jet-cooker, cuisson sur tambour, cuisson dans des systèmes de malaxeur/extrudeuse puis séchage, par exemple en étuve, par air chaud sur lit fluidisé, sur tambour rotatif, par atomisation, par extrusion ou par lyophilisation.

La déstructuration de l'état granulaire semi-cristallin de l'amidon conduit à des amidons prégélatinisés amorphes avec disparition de la croix de malte de polarisation. Dans la présente invention, l'amidon prégélatinisé présente de préférence un taux de cristallinité inférieur à 15%, de préférence inférieur à 5% et plus préférentiellement encore inférieur à 1%, c'est-à-dire dans état essentiellement amorphe. Ce taux de cristallinité peut en particulier être mesuré par diffraction aux rayons X, comme décrit dans le brevet US 5 362 777 (colonne 9, lignes 8 à 24). De tels amidons présentent généralement une solubilité dans l'eau déminéralisée à 20°C supérieure à 5 % et plus généralement comprise entre 10 et 100 %.

A titre d'exemple, on peut citer les produits fabriqués et commercialisés par la Demanderesse sous le nom de marque PREGEFLO. Le polysaccharide, en particulier l'amidon prégélatinisé, peut représenter de 7 à 20 %, de préférence 15 %, du poids total du pré-mélange.

Le pré-mélange mis en oeuvre selon l'invention renferme par ailleurs au moins un amidon de pois réticulé, présentant une teneur en amylose comprise entre 30 et 40%, de préférence entre 35 et 40%, ces pourcentages étant exprimés en poids sec par rapport au poids sec d'amidon contenu dans ladite composition. Il s'agit de préférence d'un amidon issu de pois lisse,.

La réticulation est conduite selon toute technique connue de l'homme du métier, de manière à obtenir un taux élevé de réticulation. De préférence, on utilisera comme agent réticulant le trimétaphosphate de sodium.

A titre indicatif, on se limitera à un taux de réticulation exprimé en phosphore fixé de 0,4 % maximum. Un tel produit est notamment commercialisé par la société ROQUETTE sous la dénomination commerciale CLEARAM^{®} LI4000. Cet ingrédient apportant croustillance et uniformité à la pâte d'enrobage. Il peut être incorporé au pré-mélange en une teneur comprise entre 35 et 40 %, préférentiellement de l'ordre de 37 %, par rapport au poids total du pré-mélange.

Un autre ingrédient du pré-mélange selon l'invention est une dextrine. On entend par dextrine les produits obtenus par grillage à sec d'amidon en présence d'acide. Bien que tout type de dextrine puisse convenir dans le procédé selon l'invention, les dextrines de pois sont particulièrement préférées et en particulier de pois présentant une teneur en amylose comprise entre 30 et 40%, de préférence entre 35 et 40%. Un exemple d'une telle dextrine est celle commercialisée par ROQUETTE FRERES sous la dénomination commerciale TACKIDEX^{®} C760. La dextrine peut représenter de 10 à 20% du poids total du pré-mélange.

Le pré-mélange peut également comprendre un ou plusieurs (et de préférence l'ensemble) des ingrédients suivants :
- au moins un sel d'amidon estérifié,
- de la farine de blé,
- du sel,
- au moins un agent levant acide,
- au moins un bicarbonate.

Le sel d'amidon estérifié est de préférence un sel d'amidon estérifié par un anhydride alkényl succinique, en particulier octényl succinique, qui peut par exemple être obtenu comme décrit dans la demande EP 0 786 476. On préfère utiliser un amidon modifié octényl succinate de sodium préparé à partir d'amidon waxy, de type CLEARGUM^{®} CO01, qui joue le rôle d'émulsifiant et favorise ainsi la suspension et l'homogénéisation des matières grasses, et qui contribue également à l'obtention d'un beignet présentant un aspect visuel aéré. Il peut être incorporé à hauteur de 1 à 3% en poids, de préférence 2 % en poids par rapport au poids total du pré-mélange, par exemple.

La farine de blé est généralement présente en quantité allant de 5 à 120 % en poids, par rapport au poids total de farine de riz.

De son côté, l'agent levant acide est avantageusement le pyrophosphate de sodium, qui représente généralement de 0,1 à 1% en poids, de préférence de 0,8 à 0,95% du poids total du pré-mélange.

Les ingrédients du pré-mélange décrits précédemment peuvent être mélangés par tout moyen connu de l'homme de l'art. Le pré-mélange est ensuite combiné à de l'eau et à une ou plusieurs matières grasses, choisies de préférence parmi les huiles végétales, de manière à former une émulsion correspondant à la pâte d'enrobage, dans les proportions indiquées précédemment. La pâte d'enrobage est de préférence constituée de 45 % de pré-mélange, 50 % d'eau et 5 % de matière grasse.

Cette pâte est ensuite appliquée sur les matrices de beignet farinées. Les matrices enrobées sont pré-cuites en four vapeur à une humidité relative de 50% et à une température comprise entre 190 et 210°C, de préférence de 200 à 210°C, par exemple de 204°C, de préférence pendant une durée de 5 à 10 minutes, de préférence encore pendant 6 minutes. L'étape de surgélation peut ensuite être réalisée, par exemple à une température de - 30°C pendant 20 à 40 minutes, de préférence pendant 30 minutes.

On obtient ainsi des beignets surgelés qui peuvent être réchauffés au four, par exemple à une température comprise entre 180 et 220°C, préférentiellement à 190°C, pendant une durée de 10 à 15 minutes, notamment 13 minutes.

Les beignets obtenus selon l'invention présentent une teneur réduite en matières grasses, au sens du Règlement CE 1924/2006, en ce sens qu'ils présentent une teneur en matière grasse d'au plus 7% alors que la teneur en matières grasses d'un beignet similaire (à base de volaille) du commerce est de l'ordre de 10% (lipides saturés inclus).

Les beignets selon l'invention présentent par ailleurs des caractéristiques organoleptiques similaires à celles des beignets du commerce, sur le plan de l'uniformité de l'enrobage, de sa quantité (correspondant au terme anglosaxon de « pick-up ») et de son épaisseur, ainsi que de son aspect, en particulier sa couleur et sa porosité de surface.

L'invention sera mieux comprise à l'aide des exemples qui suivent, lesquels se veulent illustratifs et non limitatifs.

### EXEMPLES

### Exemple 1 : Préparation d'un beignet selon l'invention

Une matrice à base de viande a été utilisée pour préparer les beignets. Elle présentait la composition suivante :

| **Ingrédients** | **Quantités (g)** |
|---|---|
| Viande | 720 |
| Eau glacée | 147 |
| Fibre de pois I50M | 20 |
| Sel | 10 |
| Poivre | 3 |
| Eau de réhydratation | 80 |
| Protéines de pois (NUTRALYS^{®} T65M) | 20 |
| Total | 1000 |

La fibre de pois est utilisée ici comme agent liant et pour son degré d'insolubilité. Le NUTRALYS^{®} joue également un rôle de liant. Dans la reconstitution du beignet, celuici permet surtout de substituer la viande par apport de protéines.

Le mode opératoire de production de la matrice des beignets est le suivant :

| | |
|---|---|
| **Phase 1 :** Mélangeur | Viande broyée + glace ; |
| | 1min ; vitesse max |
| **Phase 2 :** Mélangeur | Fibres hydratées + sel + poivre + NUTRALYS^{®} T65M; |
| | 2min ; vitesse max ; sous vide |
| **Phase 3** : Sur plaque | Formation de la matrice ; viande étalée sur plaque |
| **Phase 4** : Four vapeur | Cuisson à 50% d'humidité ; |
| | 150°C ; 4min |
| **Phase 5** : Découpe | Découpe des beignets de 4 cm sur 3 cm |

La matrice des beignets a été farinée à l'aide farine de blé T55.

On a ensuite préparé un pré-mélange ayant la composition suivante :

| Ingrédients | Quantité (g) |
|---|---|
| Farine de riz | 24,25 |
| Farine de blé T55 | 26,25 |
| Amidon de pois réticulé (CLEARAM LI 4000) | 13,23 |
| Sel | 2 |
| Pyrophosphate de sodium | 0,95 |
| Bicarbonate | 1,32 |
| Amidon pré-gélatinisé | 15 |
| Dextrine de pois (TACKIDEX C760) | 15 |
| Amidon estérifié (CLEARGUM CO 01) | 2 |
| TOTAL | 100 g |

Tous les ingrédients ont été pesés séparément puis mélangés manuellement pour homogénéiser le tout et éviter les grumeaux. Le mélange a ensuite été hydraté avec de l'eau puis émulsionné avec de l'huile grâce à un batteur de cuisine, dans les proportions suivantes :
Pré-mélange : 45 g
Eau minérale : 50 g
Huile de tournesol : 5 g,
pour obtenir une pâte d'enrobage qui a été appliquée sur les matrices de beignets farinées. La viscosité de la pâte était suffisamment faible pour permettre son étalement, tout en étant assez élevée pour qu'elle ne coule pas dans le four.

Les beignets ainsi enrobés ont alors été pré-cuits au four vapeur à 204°C pendant 6 min, sous une humidité relative de 50%, avant d'être surgelés puis cuits à 190°C pendant 13 minutes.

Bien qu'ayant une teneur réduite en matières grasses, ces beignets présentaient les mêmes caractéristiques d'aspect, notamment de couleur, et de croustillance que des beignets classiques pré-frits du commerce.

En particulier, on a évalué la proportion pondérale d'enrobage (ou "pick-up") de ces beignets. Ce dernier doit être compris entre 30% et 50% pour qu'un produit puisse être qualifié de beignet (Perera C. & Embuscado M.E. (2014), Texture design for breaded and battered foods. In : Lal Dar Y. & Light J. Food texture design and optimization. Chichester, UK. First édition. John Wiley & sons Ltd. P128-158). Pour mesurer le pick-up, les substrats avec farinage ont d'abord été pesés seuls puis pesés une seconde fois avec la pâte d'enrobage. Le pourcentage de pick-up est calculé grâce à la formule suivante : *Pick-up* = *[(poids du produit final* - *poids du substrat avec farine)*/*poids du produit final] x 100*

Les beignets préparés comme décrit ci-dessus présentaient un pick-up de 29,6 %.

### Exemple 2 : Influence du mode de pré-cuisson

On a testé différentes méthodes pour figer l'enrobage d'une matrice de beignet enrobée de manière similaire à ce qui a été décrit dans l'Exemple 1. Ces méthodes constituaient des alternatives à la pré-friture, visant à réduire le taux de matières grasses des beignets, à savoir la pré-cuisson dans un bain d'eau chaude et la pré-cuisson dans un four dont l'humidité relative variait de 0% (four traditionnel) à 100% (four à vapeur).

Les essais réalisés sont présentés dans le tableau suivant.

| Etapes | Matériel | **Essai 1** | **Essai 2** | **Essai 3** | **Essai 4** | **Essai 5** |
|---|---|---|---|---|---|---|
| Pré-cuisson | Bain d'eau | × | × | 80°C-30s | × | × |
| | Four | 200°C | × | × | 204°C | 204°C |
| | | 6 min | | | 6min | 6min |
| | | 0%HR | | | 50% HR | 100%HR |
| Surgélation | Surgélateur | Oui | Oui | Oui | Oui | Oui |
| Cuisson | Four | 190°C | 190°C | 190°C | 190°C | 190°C |
| | | 13min | 26min | 13min | 13min | 13min |
| | | | | | | |
| *Résultats* | Pour le batter | Peu visqueux | Peu visqueux | Figé | Peu visqueux | Peu visqueux |
| | Pour le beignet | Non croustillant | Non croustillant | Uniforme ; Non croustillant | Uniforme | Plus croustillant |

| | | | | | | |
|---|---|---|---|---|---|---|
| HR = humidité relative | | | | | | |

Comme il ressort de ce tableau, la pré-cuisson en four vapeur donnait les meilleurs résultats.

### Exemple 3 : Optimisation de l'aspect visuel

Des beignets ont été préparés comme décrit dans l'Exemple 1, excepté que :
- Le taux de Clearam^{®} est passé de 12,4% à 37,08%,
- Le taux de farine est, quant à lui, passé de 26,25% à 2,4%, et
- Pour ne pas altérer la viscosité du batter, le ratio pré-mélange/eau a été modifié de 45:50 à 40:55.

On a observé que la modification de la recette de l'Exemple 1 conduisait à des beignets un peu moins croustillants, mais favorisait l'apparition de bulles, recréant ainsi la structure obtenue après friture (aspect poreux lié à l'échappement de bulles d'eau). Visuellement, les beignets ressemblaient donc davantage à des beignets frits traditionnels. Sur le plan gustatif, le goût de farine était également moins présent.

### Exemple 4 : Influence du taux de matières grasses

Dans le but d'obtenir un aspect se rapprochant d'un beignet frit, différents taux de matière grasse ont été ajoutés à un pré-mélange similaire à celui de l'Exemple 1.

*Ingrédients et proportions testées :*
∘ 5% de matière grasse : témoin.
∘ 10% de matière grasse : Augmentation pour observer ou non une amélioration en visuel.
∘ 20% de matière grasse : Forte augmentation de la quantité d'huile, plus que possible pour vérifier l'éventuelle valeur ajoutée de la manipulation.

Les essais sont présentés dans le tableau suivant.

| | Essai 1 | Essai 2 | Essai 3 |
|---|---|---|---|
| Pré-mélange | 45g | 45g | 45g |
| Eau minérale | 50g | 45g | 35g |
| Huile de tournesol | 5g | 10g | 20g |
| | | | |
| *Résultats* | | ×Pas de différence significative | ×Pas de différence significative pour le beignet |
| | | | ×Pâte (batter) plus difficile à émulsionner |

On n'observe pas de différence significative entre les différents essais, de sorte que le taux de matières grasses peut être avantageusement limité à 5%, ce qui permet au produit de se positionner dans la catégorie « produit allégé ».

## Revendications

1. Procédé de préparation de beignets, qui comprend les étapes successives consistant à :
1) Recouvrir une matrice de beignets avec de la farine de blé,
2) Enrober la matrice farinée avec une pâte constituée de :
a. 40 à 50 % d'un pré-mélange comprenant :
i. de la farine de riz,
ii. au moins un polysaccharide hydrosoluble à froid,
iii. au moins un amidon de pois réticulé, présentant une teneur en amylose comprise entre 30 et 40% (sec/sec),
iv. au moins une dextrine
b. 40 à 55 % d'eau,
c. 3% à 10 % de matière(s) grasse(s),
d. la somme des pourcentages ci-dessus étant égale à 100%,
3) Précuire au four vapeur les matrices ainsi enrobées, pour obtenir des beignets, et
4) Surgeler les beignets ainsi obtenus,
**caractérisé en ce que** l'étape de pré-cuisson est effectuée à une humidité relative de 50% et à une température comprise entre 190 et 210°C.

2. Procédé selon la revendication 1, **caractérisé en ce que** la pâte d'enrobage est constituée de 45 % de pré-mélange, 50 % d'eau et 5 % de matière grasse.

3. Procédé selon l'une ou l'autre des revendications 1 et 2, **caractérisé en ce que** le polysaccharide est un amidon pré-gélatinisé.

4. Procédé selon l'une quelconque des revendications 1 à 3, **caractérisé en ce que** le taux de farine de riz est compris entre 20 et 25 %, de préférence de l'ordre de 24 à 25%, par rapport au poids total du pré-mélange.

5. Procédé selon l'une quelconque des revendications 1 à 4, **caractérisé en ce que** le polysaccharide représente de 7 à 20 %, de préférence 15 %, du poids total du pré-mélange.

6. Procédé selon l'une quelconque des revendications 1 à 5, **caractérisé en ce que** la teneur en amidon réticulé est comprise entre 35 et 40 %, préférentiellement de l'ordre de 37 %, par rapport au poids total du pré-mélange.

7. Procédé selon l'une quelconque des revendications 1 à 6, **caractérisé en ce que** la dextrine représente de 10 à 20% du poids total du pré-mélange.

8. Procédé selon l'une quelconque des revendications 1 à 7, **caractérisé en ce que** le pré-mélange comprend également un ou plusieurs, et de préférence l'ensemble, des ingrédients suivants :
- au moins un sel d'amidon estérifié,
- de la farine de blé,
- du sel,
- au moins un agent levant acide,
- au moins un bicarbonate.

9. Procédé selon l'une quelconque des revendications 1 à 8, **caractérisé en ce que** l'étape de surgélation est réalisée à une température de - 30°C pendant 20 à 40 minutes, de préférence 30 minutes.

10. Procédé selon l'une quelconque des revendications 1 à 9, **caractérisé en ce que** l'étape de pré-cuisson est effectuée pendant 5 à 10 minutes.

11. Beignet susceptible d'être obtenu suivant le procédé défini dans l'une quelconque des revendications 1 à 10.

## Patentansprüche

1. Verfahren zur Herstellung von Fettgebäck, das die folgenden aufeinanderfolgenden Schritte umfasst:
1) Bestreuen einer Fettgebäckform mit Weizenmehl,
2) Überziehen der bemehlten Form mit einem Teig aus:
a. 40 bis 50 % einer Vormischung, umfassend:
i. Reismehl,
ii. wenigstens ein kaltwasserlösliches Polysaccharid,
iii. wenigstens eine vernetzte Erbsenstärke mit einem Amylosegehalt zwischen 30 und 40 % (Trockenmasse/Trockenmasse),
iv. wenigstens ein Dextrin,
b. 40 bis 55 % Wasser,
c. 3 % bis 10 % Fett(e),
d. wobei die Summe der oben genannten Prozentsätze 100% ergibt,
3) Vorbacken der derart beschichteten Formen im Dampfofen, um Fettgebäck zu erhalten, und
4) Einfrieren des so erhaltenen Fettgebäcks,
**dadurch gekennzeichnet, dass** der Vorbackschritt bei einer relativen Luftfeuchtigkeit von 50 % und einer Temperatur zwischen 190 und 210 °C durchgeführt wird.

2. Verfahren nach Anspruch 1, **dadurch gekennzeichnet, dass** die Überzugsmasse aus 45 % Vormischung, 50 % Wasser und 5 % Fett besteht.

3. Verfahren nach einem der Ansprüche 1 oder 2, **dadurch gekennzeichnet, dass** das Polysaccharid eine vorgelatinierte Stärke ist.

4. Verfahren nach einem der Ansprüche 1 bis 3, **dadurch gekennzeichnet, dass** der Anteil an Reismehl zwischen 20 und 25 %, vorzugsweise im Bereich von 24 bis 25 %, bezogen auf das Gesamtgewicht der Vormischung, liegt.

5. Verfahren nach einem der Ansprüche 1 bis 4, **dadurch gekennzeichnet, dass** das Polysaccharid 7 bis 20 %, vorzugsweise 15 %, des Gesamtgewichts der Vormischung ausmacht.

6. Verfahren nach einem der Ansprüche 1 bis 5, **dadurch gekennzeichnet, dass** der Gehalt an vernetzter Stärke 35 bis 40 %, vorzugsweise etwa 37 %, bezogen auf das Gesamtgewicht der Vormischung, beträgt.

7. Verfahren nach einem der Ansprüche 1 bis 6, **dadurch gekennzeichnet, dass** das Dextrin 10 bis 20 % des Gesamtgewichts der Vormischung ausmacht.

8. Verfahren nach einem der Ansprüche 1 bis 7, **dadurch gekennzeichnet, dass** die Vormischung auch eine oder mehrere und vorzugsweise alle der folgenden Zutaten enthält:
- wenigstens ein verestertes Stärkesalz,
- Weizenmehl,
- Salz,
- wenigstens ein saures Backtriebmittel,
- wenigstens ein Bikarbonat.

9. Verfahren nach einem der Ansprüche 1 bis 8, **dadurch gekennzeichnet, dass** der Gefrierschritt bei einer Temperatur von -30°C für 20 bis 40 Minuten, vorzugsweise 30 Minuten, durchgeführt wird.

10. Verfahren nach einem der Ansprüche 1 bis 9, **dadurch gekennzeichnet, dass** der Vorbackschritt 5 bis 10 Minuten lang durchgeführt wird.

11. Fettgebäck, das gemäß dem Verfahren nach einem der Ansprüche 1 bis 10 hergestellt werden kann.

## Claims

1. A process for preparing nugget-like products, which comprises the successive steps of:
1) covering a nugget-like product matrix with wheat flour,
2) coating the floured matrix with a batter consisting of:
a. 40-50% of a premix comprising:
i. rice flour,
ii. at least one cold water-soluble polysaccharide,
iii. at least one cross-linked pea starch, having an amylose content of between 30 and 40% (dry/dry),
iv. at least one dextrin
b. 40 to 55% water,
c. 3% to 10% fat(s),
d. the sum of the above percentages being equal to 100%,
3) Pre-cooking the matrices thus coated in a steam oven to obtain nugget-like products, and
4) Freezing the nugget-like products thus obtained,
**characterised in that** the pre-cooking step is carried out at a relative humidity of 50% and at a temperature of between 190 and 210°C.

2. The process according to claim 1, **characterised in that** the coating batter consists of 45% premix, 50% water and 5% fat.

3. The process according to either of claims 1 and 2, **characterised in that** the polysaccharide is a pre-gelatinised starch.

4. The process according to any of claims 1 to 3, **characterised in that** the rice flour rate is between 20 and 25%, preferably in the order of 24 to 25%, relative to the total weight of the premix.

5. The process according to any of claims 1 to 4, **characterised in that** the polysaccharide accounts for 7 to 20%, preferably 15%, of the total weight of the premix.

6. The process according to any of claims 1 to 5, **characterised in that** the content of cross-linked starch is between 35 and 40%, preferably in the order of 37%, relative to the total weight of the premix.

7. Process according to any of claims 1 to 6, **characterised in that** the dextrin accounts for 10 to 20% of the total weight of the premix.

8. The process according to any of claims 1 to 7, **characterised in that** the premix also comprises one or more, and preferably all, of the following ingredients:
- at least one esterified starch salt,
- wheat flour,
- salt,
- at least one acidic leavening agent,
- at least one bicarbonate.

9. The process according to any of claims 1 to 8, **characterised in that** the freezing step is carried out at a temperature of -30°C for 20 to 40 minutes, preferably 30 minutes.

10. The process according to any of claims 1 to 9, **characterised in that** the pre-cooking step is performed for 5 to 10 minutes.

11. A nugget-like product obtainable according to the process defined in any of claims 1 to 10.
